# EUROPEAN PATENT SPECIFICATION

(11) **EP 2 834 684 B1**
(45) Date of publication and mention of the grant of the patent: **10.07.2019**
(21) Application number: 12846824.6
(22) Date of filing: 11.12.2012
(51) Int. Cl.: G01W 1/14, G01B 11/22, G01N 27/22

(54) **AUTOMATED ELECTRONIC METHOD FOR PERIODICAL CONTROL OF SNOWPACK CONDITIONS**
AUTOMATISCHES ELEKTRONISCHES VERFAHREN ZUR PERIODISCHEN PRÜFUNG VON SCHNEEDECKEZUSTÄNDEN
PROCÉDÉ ÉLECTRONIQUE AUTOMATISÉ POUR VÉRIFICATION PÉRIODIQUE DE CONDITIONS DE MANTEAUX NEIGEUX

(30) Priority: 30.01.2012 IT BG20120005
(43) Date of publication of application: 11.02.2015
(73) Proprietor: INSIS S.P.A., 20123 Milano (IT)
(72) Inventor: BARBOLINI, Massimiliano, I-19124 La Spezia (IT); FERRO, Francesco, I-19036 San Terenzo di Lerici (SP) (IT); BAUDONE, Matteo, I-19033 Castelnuovo Magra (SP) (IT); RICCHETTI, Laura, I-19020 Vezzano Ligure (SP) (IT)
(74) Representative: Modiano, Micaela Nadia
(86) International application number: PCT/IB2012/002671
(87) International publication number: WO 2013/114151

(56) References cited:
- FR-A1- 2 326 703
- US-A- 4 809 546
- US-A- 5 055 685
- US-A1- 2007 132 599
- US-A1- 2011 219 868

## Description

### TECHNICAL FIELD

The present invention deals with a method of measurement and monitoring of the snowpack conditions by means of an electronic ranging rod.

As is well known, phenomena of accidental detachment of avalanches pose a high threat to every urbanized mountain area, especially to ski districts designed for winter sports. In this regard, safety management becomes a high-attention element, requiring great human and economic resources.

Useful elements for risk evaluation, planning of safeguarding measures and incident prevention basically focus on snowpack characteristics.

In particular, the most important element is its thickness, as well as its time variability.

The chance to foresee with enough reliability snow-covered mountainsides detachments, which results in avalanches potentially dangerous for human settlements, allows the implementation of measures, like evacuations, road interruptions, ski resorts closure and so on, able to hold damages down.

Thanks to a detailed knowledge of the snowpack physical characteristics, it's also possible to wisely plan the construction of defense structures (such as snow barriers) to reduce the costs.

In regard to the quantitative (thickness) and qualitative (stratigraphy) snowpack features, the State of the Art envisages two alternative operational modes.

The first mode is based on the installation of automated nivometeorological stations, provided with ultrasound nivometric sensors which supervise in real time the snow thickness, as well as other generic sensors for the survey of other usual climatic parameters (temperature, air pressure and so on).

Such first operational mode has some inconvenient elements. The main one is characterized by the impossibility to install such stations in the most critical points for avalanche detachments (steep sloped ground), due to technical requirements for a level and sheltered wide area.

Another critical aspect of such option is the lack of data on the internal physical conditions of the snowpack, which are helpful to predict the insurgence of possible instability conditions. Finally, building automated stations requires huge economic investments, usually hardly affordable for territorial entities operating in a mountain area, such as small towns, mountain communities or small ski resort management trusts.

The second operational mode at the State of the Art requires the placement of manual nivometric stations, so-called snow camps, where the snowpack height survey is obtained by an operator through a daily visual reading of a graduated rod sticked into the ground.

Near snow camps, or in "extemporary" snow camps (also called "traveling" snow camps), periodical stratigraphic researches also take place.

These are directed to learn about snow characteristics inside the snowpack, such as number of layers, layer hardness and density, grain shape, temperature profile and so on.

This second option gives more information than automated stations; however it's unable to give real time information and, involving one or more operators, can only take place in accessible and free from avalanche danger zones.

This makes such an option inadequate to provide fully representative information about snowpack conditions in avalanche detachment areas, especially in situations of high nivometeorological criticity.

Due to the above said operational limits of the current methods of snowpack features surveying in reference to potential avalanche detachment areas, additional measuring takes place in such areas by means of nivometric ranging rods.

These are graduated rods installed in detachment areas during summertime and partially buried in the snow during the cold season.

The ranging rods are periodically read, in case of possible avalanches, by means of binoculars or approaching them on a helicopter.

This added option has the advantage of possible measurements in the most critical areas, though reporting strong restrictions due to its dependence on visibility conditions, possibly becoming inadequate during atmospheric disturbances.

Furthermore such measurements just concern the snowpack height, not its internal characteristics, and could be very expensive due to aircrafts use, US 2007/0132599 A1 discloses a precipitation gauge for measuring liquid and frozen precipitation. The gauge of US'599 includes a support structure having at least one light sensor and at least one light source disposed thereon.

Therefore, aim of the present invention is to define a method allowing real time measuring, transmission and acquisition of the most important snowpack parameters.

Other aim is to define a method as above, allowing its use even in the most critical locations, that is within areas of possible avalanche detachments.

Other aim is to define a method as above, allowing its realization with affordable charges even for small economic entities operating in mountain areas.

Other aim is to define any useful element for the implementation of such method.

These and other aims are going to appear as reached all through the reading of the following detailed description, showing a method for the measurement and monitoring of the snowpack conditions by means of an electronic multi-device ranging rod, and through the attached sketches, of which:

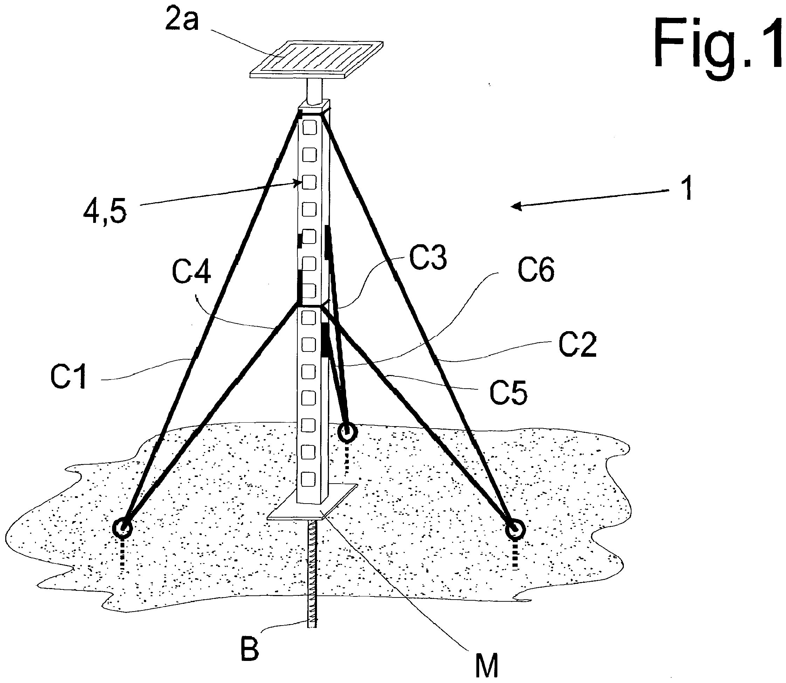

Figure 1 shows an axonometric synthetic dimetric view of a ranging rod, used for the experiment of the present invention method.

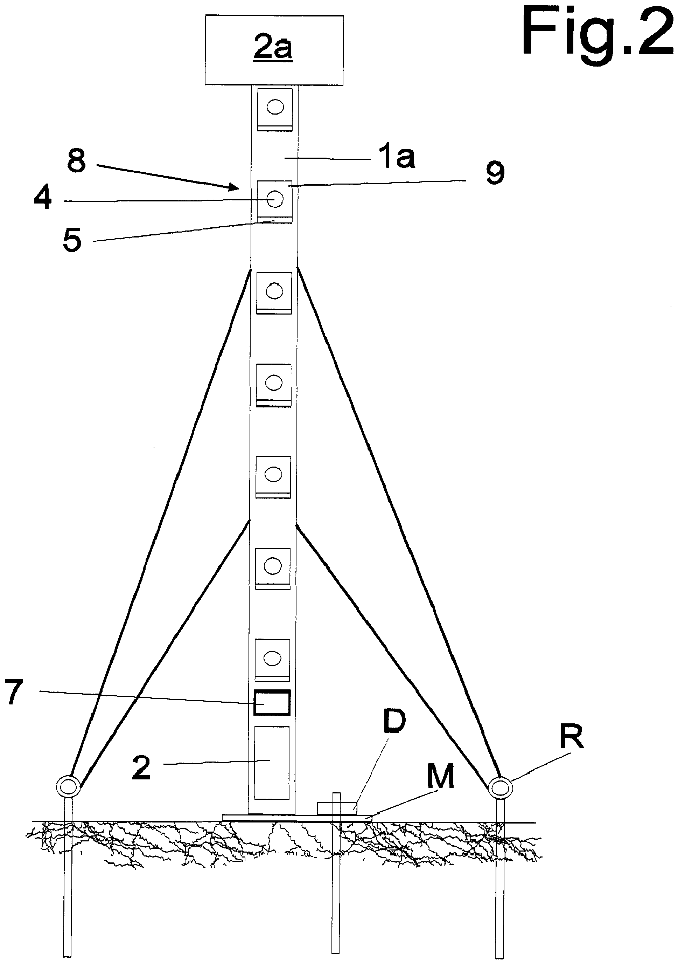

Fig. 2 shows schematically an electronic ranging rod, used for the experiment of the present invention method and its components.

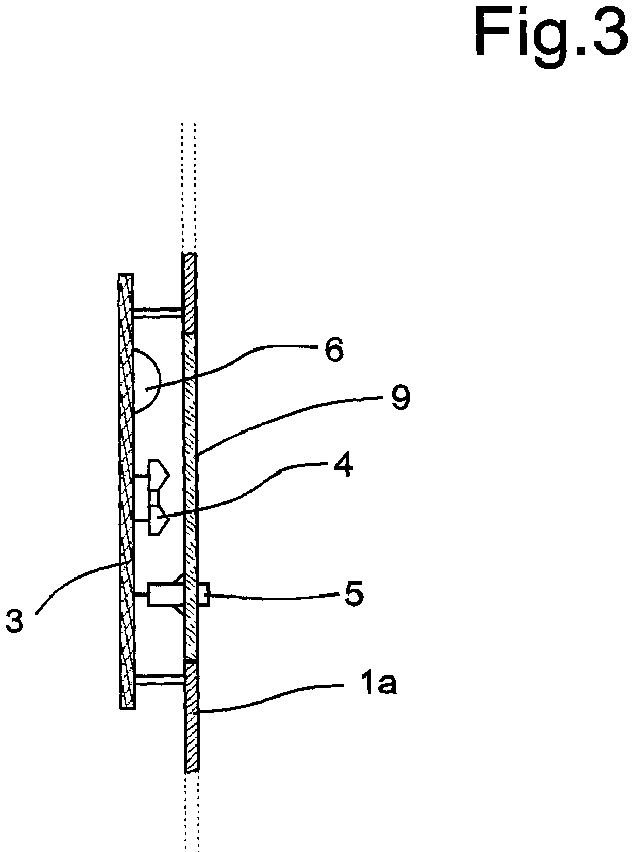

Fig. 3 shows a cross section of a window provided with an optic filter and on the back side of the electronic card including various sensors.
Fig. 4 shows a perspective view of a ranging rod, used for the method experiment of the present invention, in a ladder version.

The elements included in the method are the following:
- A data collecting system
- An autonomous supply system
- A telecommunication system towards a monitoring server.

An example of the development phases including such elements, requires the use of a hollow ranging rod, firmly stack into the ground. The ranging rod 1 has a number sensors detecting all the various characteristics of the snow pack, and includes a long lasting battery supply system.

In particular, the ranging rod 1 is provided with a tubular body 1a, approximately a square section bar, having inside an electronic card 3 supporting optical sensors 4, thermal sensors 5, eventual capacitive sensors 6; the ranging rod 1 includes also an electronic central unit 7 managing the sensors and including usual transmittal systems of data elaborated through telecommunication over the air (for example TACS, GSM, GPRS, EDGE, UMTS, HSPA, LTE) to a remote server placed at consisting distance.

The fixing of the ranging rod 1 to the ground observes the specific exigencies of the static consolidation coming from the nature of the installation site, in other words from the soil typology, the slope angle, expected high of the snowpack and its physical characteristics, the snow overload due to the wind.

In general, it is required the predisposition of an improved adherence steel anchor bar B, cemented in a hole of five centimeters in diameter, hand-made by means of a hammer drill of suitable power.

The anchor bar B is a stable constraint for a metal plate M integrated with the tubular body 1a of the ranging rod 1. Fastening the metal plate M and the bar B can require the bar B extremity tapping and a hold down nut D.

In addition to said constraint, it's advisable to arrange a wind bracing. This is for example constituted by two series of metallic ropes C placed at one hundred and twenty degrees around the ranging rod 1. The ropes are anchored to the ground by the means of generic systems; for example a ground anchorage similar to the one described for the bar B can be used, including anchor bars provided with fairlead rings R (e.g. eyebolts) to hook the ropes C.

The ropes C are hooked up to the body 1a at different heights to properly distribute the shear stress which the ranging rod 1 is subject to. Approximately, such separate hook up envisages a first series of three bracing ropes C1, C2, C3 bound to one third of the ranging rod height and a second rope series C4, C5, C6 bound to the two thirds of the ranging rod height. In case of installation on slushy grounds, the plate M anchoring to the ground can envisage a precautionary realization of small foundation plinths.

The body 1a is provided with a series of windows 8 overlooking the mentioned sensors, closed by means of optical filters (9), for example plexiglass panels, to protect the electronic elements from the strong solar radiations that may occur at high altitudes, when the ranging rod leans out the snowpack.

The temperature sensors 5, typically semiconductor temperature sensors assisted by a pre-conditioning circuit suitable to adapt the tension/temperature relation in accordance with the well-known technology, should have a sensitivity in the order of one tenth of a degree centigrade (0.1°C) and an accuracy between five tenths of a degree centigrade and one degree centigrade (0.5°C and 1°C).

The optical sensors 4, matched with the windows 8, intended to measure the snowpack height, should be distributed along the body 1a height at constant intervals, approximately between five and twenty centimeters, in order to assure the adequate accuracy. As for the present example, each optical sensor 4 is constituted by an infrared emission LED-photodiode couple, emitting and receiving a square wave of a preset frequency, as to well-known technology.

The battery supply system 2 is dimensioned to allow a minimum of six-months functional autonomy, which is a winter season typical length, with an output capable to power the whole electronic apparatus considering at least a data transmission a day.

Such battery 2, reasonably positioned inside the ranging rod or in the ground at its base in order to avoid low temperatures exposure, could be assisted by photovoltaic panels 2a, placed upon the ranging rod, and should be able to power the ranging rod even in critical conditions or in unexpected situations where more frequent surveys could help, approximately up to ten reading per day, for ten days.

As for the example of the present description, the battery 2 is a lead one, with a twelve Volts voltage and a 12 Ampere-hour capacity.

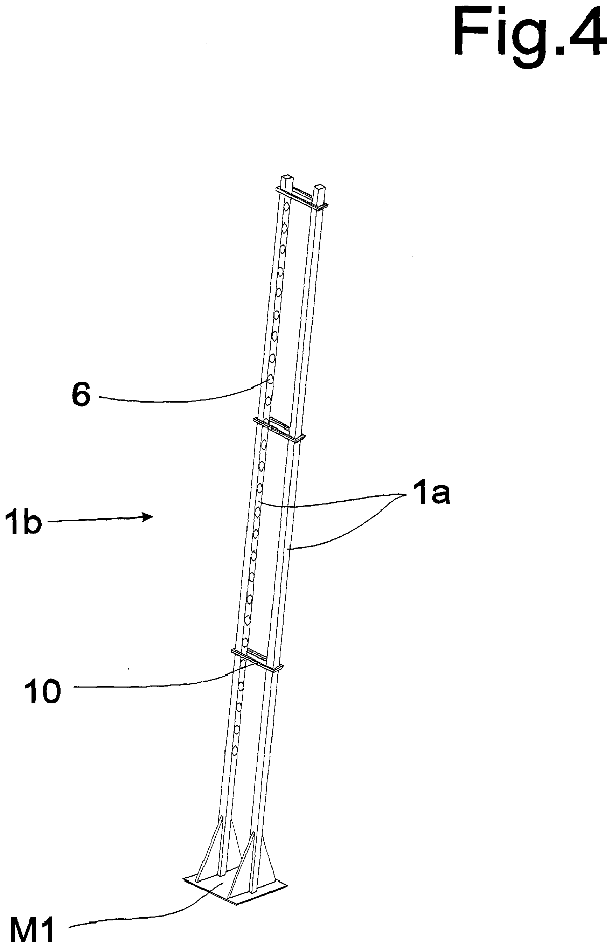

Another example that does not form part of the claimed invention allows a ranging rod alteration 1b incorporating capacitive sensors 6 related to a particular ladder shape (Fig. 4), including two different tubular bodies kept together by clamps 10 and fixed to the ground with a single plate M1, or, as an alternative, a side by side installation of the ranging rods to allow an analysis of the signals transmitted through the snowpack by the capacitive sensors, to control its density and granulometric characteristics.

The data transmitted from the ranging rod 1 are received and processed by a remote monitoring server, which processes such data by the means of a dedicated software, activating the appropriate alert systems and recording them for statistical purpose.

The ranging rod 1 in the present description has clear advantages of an easy installation even in critical avalanche detachment areas, of functional autonomy and operating diversity that makes it a better choice compared to the other methods in the State of the Art described in the introduction.

A second option for the method in the present description allows a net shape installation of the ranging rods on specific (certain) monitored lands.

Such method requires to determine the specific position of each ranging rod installed through GPS (Global Positioning System) coordinates to develop managing and forecasting strategies from the control basis, even using different data acquisition frequencies depending on the alert level and eventually with the assistance of computational algorithms implementable in the management software.

## Claims

1. Automated electronic method for monitoring the snowpack conditions, in the avalanche detachment areas including a data collection system which acts by the means of sensors (4, 5, 6), a battery power supply system (2) and an electronic control unit (7) for managing the sensors and transmitting processed collected data to a remote server by means of radio-frequency telecommunication methods, wherein
said data collection system measures a plurality of physical parameters, **characterized in that**
all said system is included in a single device featured as a ranging rod (1) with a hollow tubular body (la), provided with a plurality of windows (8) airtight sealed by means of optical filters (9) and distributed along the height of the body (la); all said sensors (4,5,6) being fixed on the same side of an inner side wall of said tubular body (la) and being all oriented towards the outside of the tubular body (1a), in order to measure said parameters in the snowpack placed outside said tubular body (1a), said windows overlooking said sensors which include optical sensors (4) that are constituted by IR emission LED photodiode couples being matched with the windows (8).

2. Automated electronic method for monitoring the snowpack conditions, in the avalanche detachment areas, as per claim 1, in which the windows (8) are distributed in a row along the height of the hollow tubular body (la) at constant intervals and indicatively between five and twenty centimeters, in order to ensure sufficient measurement accuracy.

3. Method, as per previous claims, **characterized in that** said optical sensors (4,5,6) that are constituted by IR emisision LED photodiode couples comprise optical sensors (4) adapted to measure the depth of the snowpack, said IR emission LED photodiode couples being constituted by an infrared emitting LED combined with a photodiode, adjacent one to another so that the predetermined frequency square wave emitted by the LED, in the presence of snow in front of the window (8), is reflected and received by the photodiode coupled therewith.

4. Method, as per previous claims, **characterized in that** said sensors (4,5,6) comprise temperature sensors (5) constituted by semiconductor temperature sensors assisted by a pre-conditioning circuit suitable to adapt the relation between tension and temperature ; having said temperature sensors an accuracy between five tenths of a degree centigrade and one degree centigrade.

5. Method, as per previous claims, **characterized in that** said sensors (4,5,6) comprise capacitive sensors (6) configured to measure the density and the granulometric properties of the snowpack .

6. Method, as per previous claims, wherein the fixing of the ranging rod (1) to the ground is performed by cementing an improved adherence steel anchor bar (B) inside a hole and binding to said bar (B) a metal plate (M) integrated with the tubular body (la) of the ranging rod (1),,

7. Method, as per previous claims, wherein the fixing of the ranging rod to the ground is assisted by a windbracing constituted by two sets of wire ropes (C) arranged at one hundred and twenty sexagesimal degrees around the ranging rod (1) and bonded to the ground by the means of generic anchorage systems, the hooking of said two sets of bracing ropes involving a first series of three ropes (C1, C2, C3) bound to the ranging rod at one-third of its height, and a second set of ropes (C4, C5, C6) bound to the ranging rod at two-thirds of its height.

8. Method, as to the previous claims, wherein the battery power supply system (2) consist of a 12-Volt voltage lead battery with a 12 Ampere-time capacity, or dimensioned so as to allow a functional autonomy of at least six months with an output capable to power the whole electronic apparatus in view of at least one transmission of data per day over the entire period and up to ten readings per day for at least ten days, said battery (2) being positioned inside the ranging rod or on the ground at its base to avoid exposure to extreme temperatures.

## Patentansprüche

1. Automatisiertes elektronisches Verfahren zur Überwachung der Schneedeckenzustände in den lawinengefährdeten Regionen einschließlich eines Datenerfassungssystems, das mit Hilfe von Sensoren (4, 5, 6), eines Batterieversorgungssystems (2) und einer elektronischen Steuereinheit (7) arbeitet, um die Sensoren zu verwalten und erfasste verarbeitete Daten mit Hilfe von Funkfrequenz-Telekommunikationsverfahren an einen Remote-Server zu senden, wobei
das Datenerfassungssystem eine Vielzahl physikalischer Parameter misst; **dadurch gekennzeichnet, dass**
das gesamte System in eine einzige Vorrichtung eingeschlossen ist, ausgebildet als Stange (1) mit hohlem rohrförmigem Körper (1a), versehen mit einer Vielzahl von Fenstern (8), die durch optische Füllelemente (9) luftdicht verschlossen und entlang der Höhe des Körpers (1a) verteilt sind; wobei alle Sensoren (4, 5, 6) an derselben Seite einer inneren Seitenwand des rohrförmigen Körpers (1a) befestigt und zur Außenseite des rohrförmigen Körpers (1a) hin ausgerichtet sind, um die Parameter in der Schneedecke zu messen, platziert außerhalb des rohrförmigen Körpers (1a); wobei die Fenster die Sensoren überblicken, die optische Sensoren (4) einschließen, welche aus IR-Emissions-LED-Fotodiodenpaaren bestehen, die mit den Fenstern (8) zusammenpassen.

2. Automatisiertes elektronisches Verfahren zur Überwachung der Schneedeckenzustände in den lawinengefährdeten Regionen gemäß Anspruch 1, wobei die Fenster (8) in regelmäßigen Abständen und indikativ zwischen fünf und zwanzig Zentimetern, in einer Reihe entlang der Höhe des hohlen rohrförmigen Körpers (1a), verteilt sind, um eine ausreichende Messgenauigkeit sicherzustellen.

3. Verfahren gemäß den obigen Ansprüchen, **dadurch gekennzeichnet, dass** die optischen Sensoren (4, 5, 6), die aus IR-Emissions-LED-Fotodiodenpaaren bestehen, optische Sensoren (4) umfassen, die ausgebildet sind, um die Tiefe der Schneedecke zu messen; wobei die IR-Emissions-LED-Fotodiodenpaare aus einer Infrarot ausstrahlenden LED in Kombination mit einer Fotodiode, einander benachbart, bestehen, so dass die vordefinierte Frequenz-Rechteckwelle, die von der LED in Anwesenheit von Schnee vor dem Fenster (8) ausgestrahlt wird, reflektiert und von der damit gekoppelten Fotodiode empfangen wird.

4. Verfahren gemäß den obigen Ansprüchen, **dadurch gekennzeichnet, dass** die Sensoren (4, 5, 6) Temperatursensoren (5) umfassen, die aus Halbleitertemperatursensoren bestehen, unterstützt von einem Vorbereitungsschaltkreis, geeignet, die Beziehung zwischen Spannung und Temperatur anzupassen; wobei die Temperatursensoren eine Genauigkeit zwischen fünf Zehntelgrad Celsius und einem Grad Celsius haben.

5. Verfahren gemäß den obigen Ansprüchen, **dadurch gekennzeichnet, dass** die Sensoren (4, 5, 6) kapazitive Sensoren (6) umfassen, konfiguriert, um die Dichte und die Korngrößeneigenschaften der Schneedecke zu messen.

6. Verfahren gemäß den obigen Ansprüchen, wobei die Befestigung der Stange(1) am Boden vorgenommen wird durch Zementierung eines Stahl-Ankerstabs (B) mit verbesserter Haftung in einer Bohrung und Verbinden einer Metallplatte (M), die mit dem rohrförmigen Körper (1a) der Stange(1) integral verbunden ist, mit dem Stab (B) .

7. Verfahren gemäß den obigen Ansprüchen, wobei die Befestigung der Stange am Boden unterstützt wird durch eine Windverstrebung, bestehend aus zwei Sätzen von Drahtseilen (C), angeordnet in hundertundzwanzig Sexagesimalgrad um die Stange(1) und durch generische Verankerungssysteme mit dem Boden verbunden; wobei die Befestigung der beiden Sätze von Drahtseilen durch Haken eine erste Gruppe von drei Seilen (C1, C2, C3) beinhaltet, die an der Stange auf einem Drittel ihrer Höhe befestigt sind, und ein zweite Gruppe von Seilen (C4, C5, C6), die an der Stange auf zwei Dritteln ihrer Höhe befestigt sind.

8. Verfahren gemäß den obigen Ansprüchen, wobei das Batteriestromversorgungssystem (2) aus einer 12-Volt-Bleibatterie mit 12 Amperezeitkapazität besteht oder dimensioniert ist, um eine funktionelle Autonomie von mindestens sechs Monaten mit einer Leistung zu ermöglichen, die in der Lage ist, die gesamte elektronische Vorrichtung für mindestens eine Datenübertragung pro Tag über den gesamten Zeitraum und bis zu zehn Ablesungen pro Tag über mindestens zehn Tage mit Strom zu versorgen; wobei die Batterie (2) in der Stange oder auf dem Boden an ihrer Basis positioniert ist, um das Aussetzen gegenüber extremen Temperaturen zu vermeiden.

## Revendications

1. Procédé électronique automatisé pour surveiller l'état d'un manteau neigeux, dans les zones de détachement d'avalanche, incluant un système de collecte de données qui agit au moyen de capteurs (4, 5, 6), un système d'alimentation par batterie (2) et une unité de commande électronique (7) pour gérer les capteurs et transmettre les données collectées traitées à un serveur distant au moyen de procédés de télécommunication par radiofréquence, dans lequel ledit système de collecte de données mesure une pluralité de paramètres physiques, **caractérisé en ce que** la totalité dudit système est incluse dans un seul dispositif configuré sous la forme d'un jalon (1) ayant un corps tubulaire creux (la), pourvu d'une pluralité de fenêtres (8) rendues étanches à l'air au moyen de filtres optiques (9) et réparties le long de la hauteur du corps (la), lesdits capteurs (4, 5, 6) étant tous fixés du même côté d'une paroi latérale intérieure dudit corps tubulaire (la) et étant tous orientés vers l'extérieur du corps tubulaire (la), afin de mesurer lesdits paramètres dans le manteau neigeux placé à l'extérieur dudit corps tubulaire (la), lesdites fenêtres s'ouvrant sur lesdits capteurs qui incluent des capteurs optiques (4) qui sont constitués de couples de photodiodes à LED à émission IR en correspondance avec les fenêtres (8).

2. Procédé électronique automatisé pour surveiller l'état d'un manteau neigeux, dans les zones de détachement d'avalanche selon la revendication 1, dans lequel les fenêtres (8) sont réparties sur une rangée le long de la hauteur du corps tubulaire creux (la) à des intervalles constants et compris à titre indicatif entre cinq et vingt centimètres, afin d'assurer une précision de mesure suffisante.

3. Procédé selon les revendications précédentes, **caractérisé en ce que** lesdits capteurs optiques (4, 5, 6) qui sont constitués de couples de photodiodes à LED à émission IR comportent des capteurs optiques (4) adaptés pour mesurer la profondeur du manteau neigeux, lesdits couples de photodiodes à LED à émission IR étant constitués d'une LED émettant dans l'infrarouge combinée à une photodiode, adjacentes l'une à l'autre de sorte que l'onde carrée de fréquence prédéterminée émise par la LED, en présence de neige devant la fenêtre (8), est réfléchie et reçue par la photodiode couplée à celle-ci.

4. Procédé selon les revendications précédentes, **caractérisé en ce que** lesdits capteurs (4, 5, 6) comportent des capteurs de température (5) constitués de capteurs de température à semi-conducteurs assistés d'un circuit de pré-conditionnement approprié pour adapter la relation entre la tension et la température, lesdits capteurs de température ayant une précision entre cinq dixièmes d'un degré centigrade et un degré centigrade.

5. Procédé selon les revendications précédentes, **caractérisé en ce que** lesdits capteurs (4, 5, 6) comportent des capteurs capacitifs (6) configurés pour mesurer la densité et les propriétés granulométriques du manteau neigeux.

6. Procédé selon les revendications précédentes, dans lequel la fixation du jalon (1) au sol est réalisée en cimentant une tige d'ancrage en acier à adhérence améliorée (B) à l'intérieur d'un trou et en reliant ladite tige (B) à une plaque métallique (M) intégrée au corps tubulaire (la) du jalon (1).

7. Procédé selon les revendications précédentes, dans lequel la fixation du jalon au sol est assistée d'un contreventement constitué de deux ensembles de câbles (C) agencés à cent vingt degrés sexagésimaux autour du jalon (1) et liés au sol au moyen de systèmes d'ancrage génériques, l'accrochage desdits deux ensembles de câbles d'arrimage impliquant une première série de trois câbles (C1, C2, C3) reliés au jalon à un tiers de sa hauteur, et un second ensemble de câbles (C4, C5, C6) reliés au jalon aux deux tiers de sa hauteur.

8. Procédé selon les revendications précédentes, dans lequel le système d'alimentation par batterie (2) est constitué d'une batterie au plomb à tension de 12 volts avec une capacité de 12 ampères-heure, ou dimensionnée de manière à permettre une autonomie de fonctionnement d'au moins six mois avec une sortie capable d'alimenter l'ensemble de l'appareillage électronique à raison d'au moins une transmission de données par jour sur la période complète et jusqu'à dix lectures par jour pendant au moins dix jours, ladite batterie (2) étant positionnée à l'intérieur du jalon ou sur le sol sur sa base pour éviter une exposition à des températures extrêmes.
